# EUROPEAN PATENT APPLICATION

(11) **EP 3 873 035 A1**
(43) Date of publication of application: **01.09.2021**
(21) Application number: 19895791.2
(22) Date of filing: 16.12.2019
(51) Int. Cl.: H04L 12/28

(54) **DEVICE CONTROL METHOD AND APPARATUS, CONTROL NODE, NETWORK DEVICE, AND DATA CENTER**

(30) Priority: 14.12.2018 CN 201811534985
(71) Applicant: ZTE Corporation, shenzhen Guangdong 518057 (CN)
(72) Inventor: XU, Benchong, Shenzhen, Guangdong 518057 (CN); ZHANG, Zheng, Shenzhen, Guangdong 518057 (CN); WANG, Huilai, Shenzhen, Guangdong 518057 (CN)
(74) Representative: Vinsome, Rex Martin
(86) International application number: PCT/CN2019/125742
(87) International publication number: WO 2020/119824

(57) **Abstract**

The present disclosure provides an apparatus control method, device, control node, network apparatus and data center. The method comprises: receiving a control instruction; generating a Key value Topology Information Element (KV TIE) message according to the control instruction, wherein the KV TIE message comprises a control identifier (ControlID) field, a control data key (ControlDataKey) field and a control data (ControlData) field, the ControlID field is configured to indicate a control item, the ControlData field comprises a value of the control item, the ControlDataKey field comprises a common key value field, and the common key value field carries information indicating a target control object; and sending, according to the target control object, the KV TIE message to a corresponding target apparatus in a data center.

## Description

### CROSS-REFERENCES TO RELATED APPLICATIONS

This application claims priority of Chinese Patent Application No. 201811534985.0, filed on December 14, 2018 before CNIPA, which is hereby incorporated by reference in its entirety.

### TECHNICAL FIELD

The present disclosure relates to the network field, for example, to an apparatus control method, device, control node, network apparatus and data center.

### BACKGROUND

Data center networks generally employ fat tree technology, in which apparatus are usually divided into three layers, namely, layer 2, layer 1 and layer 0. Layer 2 is a top layer of the data center network, and layer 0 is a bottom layer of the data center network. Therefore, there are generally not many apparatus in layer 2, but many apparatus in layer 1 and layer 0, especially in layer 0 where tens of thousands of apparatus may be presented. In the related art, controlling or accessing apparatus in the data center network is mainly implemented by Netconf (the Netconf (Network Configuration) Group was established in May 2003 by IETF (The Internet Engineering Task Force), and it was mainly established to propose a new XML-based network configuration protocol) or MIB (Management Information Base). Both of the two methods for accessing and controlling need to be implemented by establishing a direct connection with the apparatus to be accessed and logging into the corresponding apparatus. Therefore, the huge amount of apparatus makes it very difficult to control or access the apparatus and a simple operation will become very difficult in an environment with a large number of apparatus.

### SUMMARY

The apparatus control method, device, control node, network apparatus and data center provided by embodiments of the present invention mainly solve the problem that, when accessing an apparatus in the data center network, it is necessary to specifically establish a connection with the apparatus and log into the apparatus, resulting in difficult access control.

The embodiments of the present invention provide an apparatus control method, comprising:
receiving a control instruction;
generating a Key value Topology Information Element (KV TIE) message according to the control instruction, wherein the KV TIE message comprises a control identifier (ControlID) field, a control data key (ControlDataKey) field and a control data (ControlData) field, the ControlID field is configured to indicate a control item, the ControlData field comprises a value of the control item, the ControlDataKey field comprises a common key value field, and the common key value field carries information indicating a target control object; and
sending, according to the target control object, the KV TIE message to a corresponding target apparatus in a data center.

The embodiments of the present invention further provide an apparatus control method, comprising:
receiving a KV TIE message from a control node, wherein the KV TIE message comprises a ControlID field, a ControlDataKey field and a ControlData field, the ControlID field is configured to indicate a control item, the ControlData field comprises a value of the control item, the ControlDataKey field comprises a common key value field, and the common key value field carries information indicating a target control object;
parsing the KV TIE message to determine a target apparatus corresponding to the target control object in the KV TIE message; and
if the target apparatus comprises a present apparatus, controlling the control item of the present apparatus according to an instruction of the KV TIE message.

The embodiments of the present invention further provides an apparatus control device, comprising:
an instruction receiving module configured to receive a control instruction;
a message generating module configured to generate a KV TIE message according to the control instruction, wherein the KV TIE message comprises a ControlID field, a ControlDataKey field and a ControlData field, the ControlID field is configured to indicate a control item, the ControlData field comprises a value of the control item, the ControlDataKey field comprises a common key value field, and the common key value field carries information indicating a target control object; and
a message sending module configured to send, according to the target control object, the KV TIE message to a corresponding target apparatus in a data center.

The embodiments of the present invention further provide an apparatus control device, comprising:
a message receiving module configured to receive a KV TIE message from a control node, wherein the KV TIE message comprises a ControlID field, a ControlDataKey field and a ControlData field, the ControlID field is configured to indicate a control item, the ControlData field comprises a value of the control item, the ControlDataKey field comprises a common key value field, and the common key value field carries information indicating a target control object;
a message parsing module configured to parse the KV TIE message to determine a target apparatus corresponding to the target control object in the KV TIE message; and
an apparatus control module, configured to control the control item of a present apparatus according to an instruction of the KV TIE message, if the target apparatus comprises the present apparatus.

The embodiments of the present invention further provide a control node, comprising a first processor, a first memory and a first communication bus, wherein
the first communication bus is configured to implement connection and communication between the first processor and the first memory;
the first processor is configured to execute one or more programs stored in the first memory to implement steps of the apparatus control method as described above.

The embodiments of the present invention further provide a network apparatus, comprising a second processor, a second memory and a second communication bus, wherein
the second communication bus is configured to implement connection and communication between the second processor and the second memory;
the second processor is configured to execute one or more programs stored in the second memory to implement steps of the apparatus control method as described above.

The embodiments of the present invention further provide a data center, comprising at least one control node described above and at least one network apparatus described above.

The embodiments of the present invention further provide a storage medium, the storage medium stores at least one of the following: a first apparatus control program and a second apparatus control program. The first apparatus control program may be executed by one or more processors to implement the steps of the first apparatus control method described above; the second apparatus control program may be executed by one or more processors to implement the steps of the second apparatus control method described above.

In the apparatus control method, device, control node, network apparatus and data center provided by the embodiments of the present invention, when it is required to access and control a target apparatus in the data center, the control node apparatus receives the control instruction, generates the KV TIE message according to the control instruction, and sends the KV TIE message to the corresponding target apparatus in the data center according to a target control object. The KV TIE message comprises s ControlID field and s ControlDataKey field, wherein the ControlID field is configured to indicate a control item, and the ControlDataKey field comprises a value of the control item; in addition, the KV TIE message comprises a common key value field that carries information indicating the target control object. For other network apparatus in the data center, when receiving the KV TIE message from the control node, the KV TIE message may be parsed to determine the target apparatus corresponding to the target control object in the KV TIE message. If it is determined that the target apparatus comprises the apparatus itself, the control item of the present apparatus is controlled according to the instruction of the KV TIE message. In this embodiment, the apparatus in the data center network are controlled and managed based on Routing in fat tree (RIFT) technology, such that when it is required to access and control a certain apparatus in the data center network, the network administrator only needs to send control instructions at the control node apparatus, specify a target control object, an item to be controlled and a value of the item to be controlled. The control node apparatus generates a KV TIE message carrying the ControlID field and the ControlDataKey field according to the received control instruction, and transmits it to the corresponding target apparatus, so that the target apparatus performs the control corresponding to the control instruction, thus there is no need for the network administrator to log into the target apparatus and there is no need to establish a Netconf connection between the management server and the target apparatus, which simplifies the access and control process to the network apparatus of the data center, reduces time cost of the access and control, improves the efficiency of access and control, and optimizes the management mechanism of the data center network.

### BRIEF DESCRIPTION OF THE DRAWINGS

FIG. 1 is a schematic diagram illustrating a data center according to Embodiment 1 of the present invention;
FIG. 2 is a flowchart illustrating an apparatus control method according to Embodiment 1 of the present invention;
FIG. 3 is a flowchart illustrating a control node for sending KV TIE message according to Embodiment 1 of the present invention;
FIG. 4 is a flowchart illustrating an apparatus control method according to Embodiment 2 of the present invention;
FIG. 5 is a schematic diagram illustrating a KV TIE message according to Embodiment 3 of the present invention;
FIG. 6 is a schematic diagram illustrating a common key value field in the KV TIE message according to Embodiment 3 of the present invention;
FIG. 7 is a schematic structural diagram illustrating the apparatus control device according to Embodiment 4 of the present invention;
FIG. 8 is another schematic structural diagram illustrating the apparatus control device according to Embodiment 4 of the present invention;
FIG. 9 is still another schematic structural diagram illustrating the apparatus control device according to Embodiment 4 of the present invention;
FIG. 10 is a schematic diagram illustrating a hardware structure of the control node according to Embodiment 5 of the present invention;
FIG. 11 is a schematic diagram illustrating a hardware structure of the network apparatus according to Embodiment 5 of the present invention; and
FIG. 12 is a schematic diagram illustrating a data center according to Embodiment 5 of the present invention.

### DETAILED DESCRIPTION

In order to make the objectives, technical solutions and advantages of the present disclosure more clear, the embodiments of the present invention will be described in detail below through specific implementations in conjunction with the accompanying drawings. It should be understood that the embodiments described herein are only used to explain the present disclosure, but not limit the present disclosure.

### Embodiment 1:

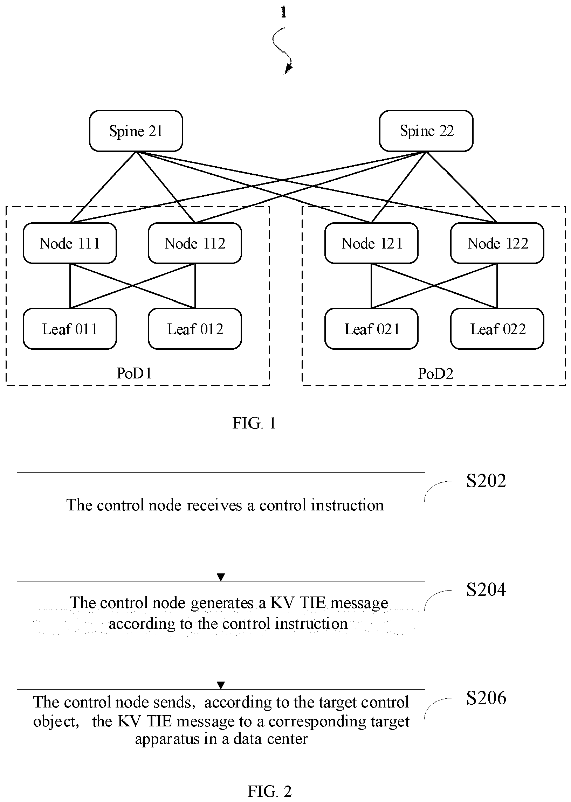

First, a schematic diagram illustrating the data center is shown in FIG. 1: the apparatus in data center 1 is divided into layer 2 apparatus, layer 1 apparatus and layer 0 apparatus from top to bottom. In some examples, layer 2 is also called "core", layer 1 is called "aggregate", and layer 0 is called "edge". In FIG. 1, layer 2 apparatus comprise Spine 21 and Spine 22; layer 1 apparatus comprise Node 111, Node 112, Node 121 and Node122; layer 0 apparatus comprise Leaf 011, Leaf 012, Leaf 02 and Leaf 022.

In the data center, there is a concept of "PoD" (Point of Delivery), and the PoD is also called "area". The Node 111, Node 112, Leaf 011 and Leaf 012 belong to PoD1, and the Node 121, Node 122, Leaf 021 and Leaf 022 belong to PoD2.

In the related art, when accessing an apparatus in the data center, it is required to log into the apparatus. For example, if a network administrator needs to configure the parameters of the Leaf 011 in data center 1, he can only log into the Leaf 011, and then enter information required for parameter configuration to the Leaf 011 via a human-computer interaction interface of the Leaf 011, thus completing the reconfiguration of the corresponding parameters; or a Netconf connection has to be established between a management server and the apparatus, and then various information required to complete the parameter configuration is sent to the Leaf 011 by the management server using the Netconf connection, such that the Leaf 011 can complete parameter modification and other tasks after receiving the relevant information through the Netconf connection. However, if the target apparatus that needs to be accessed and controlled is Node 112, the apparatus that the network administrator needs to log into will become Node 112 as well. When establishing the Netconf connection to implement access and control, the connection between Node 112 and the management server also needs to be established, therefore, this kind of access control method is very troublesome. Especially when managing layer 0 apparatus, as the number of layer 0 apparatus is big, the difficulty of accessing to and controlling data center apparatus by the network administrator is increased and the flexibility of the data center management is reduced. Therefore, in order to solve these problems, this embodiment provides an apparatus control method, and the flowchart of the apparatus control method is shown in FIG. 2:

S202: receiving, by the control node, a control instruction.

In this embodiment, the network administrator can select one or more control nodes from the data center. Under normal circumstances, the network administrator can select a layer 2 apparatus in the data center as a control nodes. For example, in the data center shown in FIG. 1, Spine21 and Spine22 may be used as control nodes. The reason for selecting A Layer 2 apparatus as the control node is that in the data center, the control node needs to send information to the target apparatus (that is, the target control object) according to the control instruction, and the database of the layer 2 apparatus stores topological relationships of other apparatus in the data center. But for the apparatus with lower level (such as layer 1 apparatus), the database thereof does not store the topological relationships of apparatus in PoDs other than the PoD to which the apparatus with lower level belong. Therefore, if a layer 1 apparatus is selected as a control node, there may be no way to directly implement access and control to apparatus in other PoDs through this layer 1 apparatus. For the network administrator, if the selected control node is an apparatus other than the layer 2 apparatus, he needs to select, according to the control node he needs to access, the corresponding control node to issue control instructions, which will result in that the data center management cannot simplified to the greatest extent.

In this embodiment, the control node may receive a control instruction. The control instruction comprises information indicating objects to be controlled, that is, the target control objects. For example, the control instruction will indicate the target apparatus to be controlled this time. On the other hand, the control instruction also comprises control items, that is, information on parameter(s) of the target control objects to be controlled this time. Of course, the control instruction should also specify a value of corresponding control item. For example, assuming that the control instruction indicates that it is necessary to control the target apparatus of the enablement of a zero configuration mode,the control instruction will also specify whether it is enabled or not; for another example, assuming that the control item in the control instruction is a link cost, then the control command will also carry a specific value of the link cost.

The network administrator may input control instructions through the control node via command lines or management interfaces such as Netconf, mib, etc. For example, assuming that in the data center 1 shown in FIG. 1, the control node selected by the network administrator is the Spine 21, then the network administrator may input control instructions through any one of the command lines, Netconf management interface and mib management interface of the Spine 21.

S204: generating, by the control node, a KV TIE message according to the control instruction.

After receiving the control instruction, the control node generates a KV TIE message according to information carried in the control instruction, that is, the control instruction is converted into the KV TIE message.

The KV TIE message is a message based on the RIFT(Routing in fat tree) protocol. The key value TIE structure defined by the RIFT protocol is {KeyID, Value}. In this embodiment, KeyID is used as a key. The KV TIE message comprises: a ControlID field, a ControlDataKey field and a ControlData field. The ControlID field is configured to indicate a control item, and the ControlData field comprises the value of the control item. Therefore, different ControlID fields generally correspond to different ControlData fields. In this embodiment, the Value of the TIE structure is the content of the ControlData field, and the ControlData field is a variable-length field, which indicates key value information.

The ControlDataKey field comprises a common key (ControlDataCommKey) field. The common key value field carries information indicating a target control object, that is, the common key value field is configured to indicate information such as an apparatus or a port that the target control object corresponds to. The common key value field may generally comprise a system identifier (system ID) and a link identifier (link ID) of the apparatus. In some other examples of this embodiment, the common key value field may also comprise a PoD field and a Level (level) field. Generally, the ControlDataKey field of each KV TIE message comprises a common key value field. In some cases, the ControlDataKey field may only comprises a common key value field,while in some other cases, in addition to the common key value field, the ControlDataKey field may comprise other fields, such as a direction field, a prefix field, etc..

The ControlID field will be described as follows:
According to the previous description, the control item indicated by the ControlID field, that is,the value(s) of which item(s) will be controlled by the present KV TIE message. Generally, the control items comprise at least one of the following:

"POD value", for example, in an example of this embodiment, when the value in the ControlID field is "1", RiftControlIDPoD=1, it indicates that the control item is the value of POD, and the value carried in the ControlData field is the value of POD.

"Whether to enable a zero configuration mode", for example, in an example of this embodiment, when the value in the ControlID field is "2", RiftControlIDZTPMode=2, it indicates that the control item is "whether to enable a zero configuration mode", and the value carried in the ControlData field is of Boolean type. When the value carried in the ControlData field is "TRUE", it indicates that the zero configuration mode is enabled. On the contrary, when the value carried in the ControlData field is "FALSE", it indicates that the zero configuration mode is disabled.

"Node name", for example, when the value in the ControlID field is "3", RiftControlIDName=3, it indicates that the control item is "Node name", and the value carried in the ControlData field is the name of the node, in this case, the value in the ControlData field is of string type. For example, in an example of this embodiment, the length of the ControlData field is 32 bits.

"Whether to set an overload", for example, when the value in the ControlID field is "4", RiftControlIDOverload=4, it indicates that the control item is "Whether to set an overload", correspondingly, the value carried in the ControlData field is of Boolean type. When the value carried in the ControlData field is "TRUE", it indicates that the overload is set. On the contrary, when the value carried in the ControlData field is "FALSE", it indicates that the overload is not set.

"Whether to support a leaf-to-leaf (Leaflndecation) feature", for example, when the value in the ControlID field is "5", RiftControlIDLeafIndecation=5, it indicates that the control item is "whether to support a leaf-to-leaf feature", correspondingly, the value carried in the ControlData field is of Boolean type. When the value carried in the ControlData field is "TRUE", it indicates that the leaf-to-leaf feature is supported. On the contrary, when the value carried in the ControlData field is "FALSE", it indicates that the leaf-to-leaf feature is not supported.

"Link cost", for example, when the value in the ControlID field is "6", RiftControlIDCost=6, it indicates that the control item is "Link cost", and the value carried in the ControlData field is the link cost. In this case, the value in the ControlData field is of WORD32 type.

"Whether to enable BFD (Bidirectional Forwarding Detection)", for example, when the value in the ControlID field is "7", RiftControlIDBfdEnable=7, it indicates that the control item is "whether to enable BFD", correspondingly, the value carried in the ControlData field is of Boolean type. When the value carried in the ControlData field is "TRUE", it is indicated that BFD is enabled. On the contrary, when the value carried in the ControlData field is "FALSE", it is indicated that BFD is disabled.

"Whether to generate a default route"; for example, when the value in the ControlID field is "8", RiftControlIDDefaultRouteOriginate=8, it indicates that the control item is "whether to generate a default route", correspondingly, the value carried in the ControlData field is of Boolean type. When the value carried in the ControlData field is "TRUE", it indicates that a default route is generated. On the contrary, when the value carried in the ControlData field is "FALSE", it indicates that the default route is not generated.

"Whether to enable a flooding reduction"; for example, when the value in the ControlID field is "9", RiftControlIDFloodReducing=9, it indicates that the control item is "whether to enable a flooding reduction", correspondingly, the value carried in the control data field is of Boolean type. When the value carried in the ControlData field is "TRUE", it indicates that the flooding reduction is enabled. On the contrary, when the value carried in the ControlData field is "FALSE", it indicates that the flooding reduction is disabled.

"Community", for example, when the value in the ControlID field is "10", RiftControlIDCommunity=10, it indicates that the control item is "Community", and the value carried in the ControlData field is the value of Community. However, it should be noted that as there may be a plurality of communities on one apparatus, if the instruction is only to control Community of the apparatus, the apparatus may not know which Community the value carried in the ControlData field is directed to after receiving the KV TIE message, that is, the apparatus cannot determine the target control object according to the KV TIE message, so in this embodiment, when the information carried in the ControlID field indicates that the control item is Community, the common key value field further comprises a direction field, which is used to indicate the specific community or communities on the apparatus as the target control objects. The direction field may be of BYTE type.

"PGP (Policy Guided Prefixes)", for example, when the value in the ControlID field is "10", RiftControlIDPGP=11, it indicates that the control item is "PGP", and the value carried in the ControlData field comprises a next Hop set (NexthopSet), a Community set (CommunitySet) and a cost (Cost). In this embodiment, when the information carried in the ControlID field indicates that the control item is PGP, the ControlDataKey field further comprises a prefix field and a direction field.

It will be understood that in the foregoing description, "1", "2"... "11" in the ControlID field respectively indicate 11 control items including the POD value, whether to enable the zero configuration mode...PGP, but there is no doubt that in this embodiment, each of the apparatus in the data center has stored the mapping relationship between the values and the corresponding control items. In some other examples, the mapping relationship may be different. For example, when the ControlID field carries "1", it indicates that the control item is PGP, when the ControlID field carries "2", it indicates that the control item is the value of POD, etc. Furthermore, in some examples of this embodiment, the value in the ControlID field may be of string type. In this case, instead of using a number to indicate the control item, a string may even be directly carried in the ControlID field to indicate the control item.

In some examples of this embodiment, the KV TIE message further comprises a TYPE (type) field. The information carried in the TYPE field is used to indicate whether the KV TIE message is a message for control. For example, in an example of this embodiment, the TYPE field in the KV TIE message is a "WORD 16 TYPE" field. When TYPE=1, it indicates that the KV TIE message is a message of control type. Of course, if TYPE=0, it indicates that the KV TIE message is not a message of control type.

In some examples of this embodiment, the KV TIE message further comprises at least one of the following: a ControlDataKeyLength (ControlDataKey length) field and a ControlDataLength (ControlData length) field, wherein the ControlDataKeyLength field is configured to indicate the length of the ControlDataKey field in the KV TIE message. For example, in an example, the Length field is a "WORD16 ControlDataKeyLength" field, and the ControlDataLength field carries the length of the ControlData field.

An example of the structure of a KV TIE message is given below:

```
     KV TIE
     {TYPE //it is configured to indicate that the KV TIE
 message is a control message
       Length //Optional, it is configured to indicate the length of
       the KV TIE message
       ControlTypeValue
       {ControlID //it is configured to indicate the control item to be
 controlled by the KV TIE message
            ControlDataKeyLength //it is configured to indicate the length of the
 ControlDataKey field
            ControlDataKey
            {
                ControlDataCommKey
                {
                     SystemID
                     LinkID
                     PoD //it is configured to indicate that it takes effect
 in a specified Pod
                     Level // it is configured to indicate that it takes effect at
 a specified Level
                }
                other //different ControlID, different fields may not
 exist
            }
            ControlDataLength //it is configured to indicate the length of
 ControlData
            ControlData //it is configured to indicate the value of
 ControlData, different ControlIDs have different values
     }
```

In this embodiment, the KV TIE message may be a KV N-TIE (Key Value north Topology Information Element) message or a KV S-TIE (Key value south Topology Information Element) message. Generally, the KV S-TIE message is selected to implement the management of the target apparatus in the data center and implement a top-down management mechanism.

S206: sending, by the control node, the KV TIE message to the corresponding target apparatus in the data center according to the target control object.

After the control node has generated the KV TIE message, it may be determined how to send the KV TIE message according to the target control object of the KV TIE message, such that the KV TIE message can be transmitted to the target apparatus corresponding to the target control object. It will be understood that the target control object may be the apparatus, or a port, a community on the apparatus.

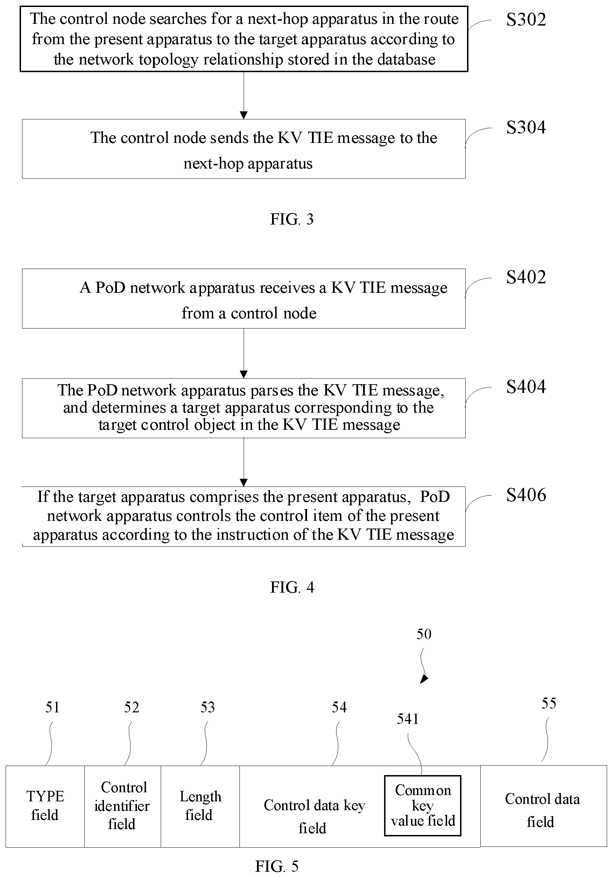

The process of sending the KV TIE messages by the control node is briefly described in conjunction with FIG. 3:

S302: searching, by the control node, for a next-hop apparatus in a route from the present apparatus to the target apparatus according to a network topology relationship stored in the database.

The network topology of the data center is stored in the database, and the control node can determine a route to the target apparatus by querying the network topology. After determining the route to the target apparatus, the control node can determine the next-hop apparatus for reaching the target apparatus, that is, in order to send the KV TIE message to the target apparatus, the control node needs to send the KV TIE message to a certain apparatus, that is, the next-hop apparatus.

S304: the control node sending the KV TIE message to the next-hop apparatus.

After determining the next-hop apparatus, the control node may send the KV TIE message to the next-hop apparatus, such that the next-hop apparatus can transmit the KV TIE message again until the KV TIE message reaches the target apparatus.

The apparatus control method provided in this embodiment is applied to a control node in a data center, for example, applied to a layer 2 apparatus. By extending the key value TIE of the RIFT protocol, the KV TIE message supports messages of control type, and when receiving the control instruction from the network administrator, the control instruction is converted into a KV TIE message for control according to the field format in the KV TIE message, and then the KV TIE message is sent to the target apparatus corresponding to the target control object, such that the target apparatus can execute in accordance with the corresponding control requirements, thereby avoiding the problem of logging into the corresponding target apparatus when accessing to and controlling the target apparatus in the data center, or the problem of specially establishing a Netconf connection with the target apparatus, simplifying the process of accessing to the apparatus of the data center and optimizing the management plan of the data center.

### Embodiment 2:

In the embodiment 1, the apparatus control method that can be applied to a control node is described. In this embodiment, an apparatus control method that can be applied to apparatus of a non-control node in the data center is described. It will be understood that, the apparatus of the non-control node in the data center are apparatus belonging to a PoD. In this embodiment, in order to distinguish these apparatus from the control node, these apparatus are referred to as PoD network apparatus.

The flowchart of an apparatus control method applied to PoD network apparatus is shown in FIG. 4:

S402: receiving, by a PoD network apparatus, a KV TIE message from a control node.

The PoD network apparatus will receive the KV TIE message sent by the control node. It will be understood that the expression "receiving the KV TIE message from the control node" does not mean that the PoD network apparatus directly receives the KV TIE message from the control node, but just illustrates that the KV TIE message is sent from the control node, and the KV TIE message may be received directly from the control node, or may be received through other PoD network apparatus. For example, a layer 0 apparatus may receive the KV TIE message directly from a layer 1 apparatus, but in essence, the KV TIE message is sent by a layer 2 control node.

S404: parsing, by the PoD network apparatus, the KV TIE message, and determining a target apparatus corresponding to a target control object in the KV TIE message.

After receiving the KV TIE message, the PoD network apparatus may parse the KV TIE message. The KV TIE message comprises: a ControlID field, a ControlDataKey field and a ControlData field. The ControlID field is configured to indicate the control item, and the ControlData field comprises a value of the control item. Therefore, different ControlID fields generally correspond to different ControlData fields. In this embodiment, a value of the TIE structure is the content of the ControlDataKey field, and the ControlData field is a variable-length field, which indicates key value information.

The ControlDataKey field comprises a common key field. The common key value field carries information indicating a target control object, that is, the common key value field is configured to indicate information such as an apparatus or a port that the target control object corresponds to. Generally, the common key value field may comprise a system ID and a link ID of the apparatus. In some other examples of this embodiment, the common key value field may also comprise a PoD field and a Level field. Generally, the ControlDataKey field of each KV TIE message comprises a common key value field. In some cases, the ControlDataKey field may only comprise a common key value field, while in some other cases, in addition to the common key value field, the ControlDataKey field may comprise other fields, such as a direction field, a prefix field, etc.

The ControlID field will be described as follows:

According to the previous description, the control item indicated by the ControlID field, that is,the value(s) of which item(s) will be controlled by the present KV TIE message. Generally, the control items comprise at least one of the following:

"POD value", for example, in an example of this embodiment, when the value in the ControlID field is "1", RiftControlIDPoD=1, it indicates that the control item is the value of POD, and the value carried in the ControlData field is the value of POD.

"Whether to enable a zero configuration mode", for example, in an example of this embodiment, when the value in the ControlID field is "2", RiftControlIDZTPMode=2, it indicates that the control item is "whether to enable a zero configuration mode", and the value carried in the ControlData field is of Boolean type. When the value carried in the ControlData field is "TRUE", it indicates that the zero configuration mode is enabled. On the contrary, when the value carried in the ControlData field is "FALSE", it indicates that the zero configuration mode is disabled.

"Node name", for example, when the value in the ControlID field is "3", RiftControlIDName=3, it indicates that the control item is "Node name", and the value carried in the ControlData field is the name of the node, in this case, the value in the ControlData field is of string type. For example, in an example of this embodiment, the length of the ControlData field is 32 bits.

"Whether to set an overload", for example, when the value in the ControlID field is "4", RiftControlIDOverload=4, it indicates that the control item is "Whether to set an overload", correspondingly, the value carried in the ControlData field is of Boolean type. When the value carried in the ControlData field is "TRUE", it indicates that the overload is set. On the contrary, when the value carried in the ControlData field is "FALSE", it indicates that the overload is not set.

"Whether to support a leaf-to-leaf (Leaflndecation) feature", for example, when the value in the ControlID field is "5", RiftControlIDLeafIndecation=5, it indicates that the control item is "whether to support a leaf-to-leaf feature", correspondingly, the value carried in the ControlData field is of Boolean type. When the value carried in the ControlData field is "TRUE", it indicates that the leaf-to-leaf feature is supported. On the contrary, when the value carried in the ControlData field is "FALSE", it indicates that the leaf-to-leaf feature is not supported.

"Link cost", for example, when the value in the ControlID field is "6", RiftControlIDCost=6, it indicates that the control item is "Link cost", and the value carried in the ControlData field is the link cost. In this case, the value in the ControlData field is of WORD32 type.

"Whether to enable BFD", for example, when the value in the ControlID field is "7", RiftControlIDBfdEnable=7, it indicates that the control item is "whether to enable BFD", correspondingly, the value carried in the ControlData field is of Boolean type. When the value carried in the ControlData field is "TRUE", it is indicated that BFD is enabled. On the contrary, when the value carried in the ControlData field is "FALSE", it is indicated that BFD is disabled.

"Whether to generate a default route"; for example, when the value in the ControlID field is "8", RiftControlIDDefaultRouteOriginate=8, it indicates that the control item is "whether to generate a default route", correspondingly, the value carried in the ControlData field is of Boolean type. When the value carried in the ControlData field is "TRUE", it indicates that a default route is generated. On the contrary, when the value carried in the ControlData field is "FALSE", it indicates that the default route is not generated.

"Whether to enable a flooding reduction"; for example, when the value in the ControlID field is "9", RiftControlIDFloodReducing=9, it indicates that the control item is "whether to enable a flooding reduction", correspondingly, the value carried in the control data field is of Boolean type. When the value carried in the ControlData field is "TRUE", it indicates that the flooding reduction is enabled. On the contrary, when the value carried in the ControlData field is "FALSE", it indicates that the flooding reduction is disabled.

"Community", for example, when the value in the ControlID field is "10", RiftControlIDCommunity=10, it indicates that the control item is "Community", and the value carried in the ControlData field is the value of Community. However, it should be noted that as there may be a plurality of communities on one apparatus, if the instruction is only to control Community of the apparatus, the apparatus may not know which Community the value carried in the ControlData field is directed to after receiving the KV TIE message, that is, the apparatus cannot determine the target control object according to the KV TIE message, so in this embodiment, when the information carried in the ControlID field indicates that the control item is Community, the common key value field further comprises a direction field, which is used to indicate the specific community or communities on the apparatus as the target control objects. The direction field may be of BYTE type.

"PGP", for example, when the value in the ControlID field is "10", RiftControlIDPGP=11, it indicates that the control item is "PGP", and the value carried in the ControlData field comprises a next Hop set (NexthopSet), a Community set (CommunitySet) and a cost (Cost). In this embodiment, when the information carried in the ControlID field indicates that the control item is PGP, the ControlDataKey field further comprises a prefix field and a direction field.

It will be understood that in the foregoing description, "1", "2"... "11" in the ControlID field respectively indicate 11 control items including the POD value, whether to enable the zero configuration mode...PGP, but there is no doubt that in this embodiment, each of the apparatus in the data center has stored the mapping relationship between the values and the corresponding control items. In some other examples, the mapping relationship may be different. For example, when the ControlID field carries "1", it indicates that the control item is PGP, when the ControlID field carries "2", it indicates that the control item is the value of POD, etc. Furthermore, in some examples of this embodiment, the value in the ControlID field may be of string type. In this case, instead of using a number to indicate the control item, a string may even be directly carried in the ControlID field to indicate the control item.

In some examples of this embodiment, the KV TIE message further comprises a type (TYPE) field. The information carried in the TYPE field is used to indicate whether the KV TIE message is a message for control. For example, in an example of this embodiment, the TYPE field in the KV TIE message is a "WORD 16 TYPE" field. When TYPE=1, it indicates that the KV TIE message is a message of control type. Of course, if TYPE=0, it indicates that the KV TIE message is not a message of control type.

In some examples of this embodiment, the KV TIE message further comprises at least one of the following: a ControlDataKeyLength (ControlDataKey length) field and a ControlDataLength (ControlData length) field, wherein the ControlDataKeyLength field is configured to indicate the length of the ControlDataKey field in the KV TIE message. For example, in an example, the Length field is a "WORD 16 ControlDataKeyLength" field, and the ControlDataLength field carries the length of the ControlData field.

In this embodiment, the KV TIE message may be a KV S-TIE message or a KV N-TIE message. Generally, the KV S-TIE message is selected to implement the management of the target apparatus in the data center and implement a top-down management mechanism.

In some examples of this embodiment, the PoD network apparatus may first parse the common key value field of the KV TIE message. Then, it is determined whether the target apparatus corresponding to the KV TIE message comprises the present apparatus, according to the common key value field. If it is determined that the target apparatus corresponding to the KV TIE message does not comprise the present apparatus, the PoD network apparatus may stop further parsing of the KV TIE message. For example, the PoD network apparatus may determine whether the SystemID carried in the common key value field of the KV TIE message is the system identifier of the present apparatus. If not, it indicates that the KV TIE message was not sent to the present apparatus. Therefore, the PoD network apparatus may stop parsing of the KV TIE message.

Of course, it shall be understood that this method for determining whether the KV TIE message is sent to the present apparatus, or the method for determining whether the target apparatus corresponding to the KV TIE message comprises the present apparatus is based on that the control node must clearly carry all the target apparatus system identifiers in the common key value field when generating the KV TIE message. It is completely feasible when the number of target apparatus corresponding to KV TIE messages is small, but in fact, the target apparatus corresponding to some KV TIE messages may be all apparatus in one or several PoDs, or even may be all layer 1 apparatus and layer 0 apparatus in the data center, so the number of target apparatus corresponding to the KV TIE message is huge. In this case, it is obviously unrealistic to require that all the target apparatus system identifiers are carried in the common key value field. Therefore, in some examples of this embodiment, the KV TIE message may be a wildcard message. For example, if a certain KV TIE message is a wildcard message for all apparatus in a PoD, only the valid PoD value may be specified in the common key value field and both of the SystemID and the LinkID are filled with "0". In this way, when a certain network apparatus in the PoD receives the KV TIE message, it may be determined that the KV TIE message is for this PoD, that is, the target apparatus corresponding to the KV TIE message comprises the present apparatus.

Therefore, in some examples of this embodiment, although the common key value field in the KV TIE message does not carry the SystemID of the PoD network apparatus, the PoD network apparatus may determine that the target apparatus corresponding to the KV TIE message comprises the present apparatus as well.

S406: if the target apparatus comprises the present apparatus, controlling, by the PoD network apparatus, the control items of the present apparatus according to the instruction of the KV TIE message.

In this embodiment, if the PoD network apparatus determines that the target apparatus of the received KV TIE message comprises the present apparatus, the PoD network apparatus may control the control items of the present apparatus according to the instruction of the KV TIE message. For example, according to the instructions of the KV TIE message, whether to enable BFD is controlled and the link cost is set, etc..

It should be noted that when the control item corresponding to the KV TIE message is a link cost or BFD enablement, the link identifier (namely LinkID) has to be specified in the common key value field of the KV TIE message. But sometimes when the control item corresponding to the KV TIE message is the link cost or BFD enablement, the link identifier is not specified in the common key value field. In this case, the PoD network apparatus that has received the KV TIE message may perform process in any of the following three ways:
Method 1: the KV TIE message will be directly discarded;
Method 2: the present apparatus does not process it, a flood process will be performed on the apparatus directly;
Method 3: assuming that the target apparatus of the KV TIE message is the present apparatus, that is, the link cost or to BFD enablement of the present apparatus is controlled according to the instructions of the KV TIE message.

It will be understood that the target apparatus of the KV TIE message may comprise a third apparatus other than the present apparatus: for example, the target apparatus corresponding to the KV TIE message does not originally comprise the present apparatus, but comprises a certain other apparatus other than the present apparatus, that is, a third apparatus, in this case, the PoD network apparatus has to send the KV TIE message to the third apparatus.

For another example, the target apparatus of the KV TIE message comprises the present PoD network apparatus, but at the same time, the target apparatus also comprises the third apparatus. If the KV TIE message is a wildcard message, the PoD network apparatus may have to send the KV TIE message to the third apparatus as well.

In this embodiment, when the PoD network apparatus sends the KV TIE message to the third apparatus, it is performed through flooding.

The apparatus control method provided in this embodiment can be applied to PoD network apparatus in the data center other than the control node. After receiving the KV TIE message, it is determined whether the present apparatus is the target apparatus of the KV TIE message through parsing, according to the information carried in the common key value field of the KV TIE message. If the present apparatus is the target apparatus of the KV TIE message, the PoD network apparatus can execute according to the instruction of the KV TIE message, so as to realize the control to the present apparatus by the network administrator. In the case where it is determined that the target apparatus of the KV TIE message also comprises other apparatus, the PoD network apparatus may also send the KV TIE message to the corresponding apparatus in the form of flooding, so as to complete the access and control to the corresponding apparatus by the network administrator. Thus, the network administrator does not have to log into the apparatus to be accessed and controlled, and there is no need to establish a Netconf connection between the management server and the corresponding apparatus, thereby improving the flexibility and convenience of accessing to and controlling apparatus of the data center and reduces burden on the network administrator.

### Embodiment 3:

In order to make the advantages and details of the apparatus control method provided in the foregoing embodiment more clear to those skilled in the art, this embodiment will describe the process of controlling the node side and the PoD network apparatus side through the apparatus control method, in conjunction with specific examples:

The following takes that the KV TIE message is a KV S-TIE message as an example for description: in this embodiment, each apparatus in the data center pre-extends a RIFT protocol key value TIE, such that the KV S-TIE message supports control. The key value TIE structure defined by RIFT is {KeyID, Value}. In this example, Key ID is used as the key, and the KV S-TIE message is defined to comprise the following fields:
WORD16 TYPE field, where "TYPE=1" means that the KV S-TIE message is of control parameter type;
WORD16 ControlID field configured to indicate the type of ControlData, that is, to indicate the control item;
WORD16 ControlDataKeyLength field configured to indicate a length of the ControlDataKey field;
ControlDataKey field which is a variable-length field and configured to indicate key value information, where different ControlIDs correspond to different ControlDataKeys;
In the ControlDataKey field, a ControlDataCommKey field is also defined. The ControlDataCommKey field comprises: a WORD64 SystemID field and a WORD16 LinkID field. Generally, each ControlDataKey field comprises a ControlDataCommKey field, and at the same time, the ControlDataKey field may include only the ControlDataCommKey field.

ControlData field which is a variable-length field and configured to a key value information, and different ControlIDs correspond to different ControlData. The Value in the TIE structure refers to the content in the ControlData field.

The type of ControlID, that is, the control item will be described as follows:
RiftControlIDPoD=1, where the value carried in the ControlData field is the WORD16 Pod value;
RiftControlIDZTPMode=2, where the value corresponding to the ControlData field is of Boolean type, and TRUE indicates that a zero configuration mode is enabled;
RiftControlIDName=3, where the value corresponding to the ControlData field is of String type with a length of 32, and it indicates the name of the node;
RiftControlIDOverload=4, where the value corresponding to the ControlData field is of Boolean type, and TRUE means that Overload is set;
RiftControlIDLeafIndecation=5, where the value corresponding to the ControlData field is of Boolean type, and TRUE indicates that the leaf-to-leaf feature is supported;
RiftControlIDCost=6, where the ControlData field corresponds to a value of WORD32 type, which indicates the link cost;
RiftControlIDBfdEnable=7, where the value of the ControlData field is of Boolean type, and TRUE means that BFD is enabled;
RiftControlIDDefaultRouteOriginate=8, where the value corresponding to the ControlData field is of Boolean type, and TRUE indicates that the default route is generated;
RiftControlIDFloodReducing=9, where the value corresponding to the ControlData field is of Boolean type, and TRUE indicates that the flooding reduction is enabled;
RiftControlIDCommunity=10, where, the value carried in the ControlData field is a Community syntagm, which contains one or more Community values; it is worth noting that in this case, the ControlDataCommKey field also includes a BYTE type direction field.
RiftControlIDPGP=11, where, the values carried in the ControlData field are the next hop set, the Community set, and the Cost; in this case, the ControlDataCommKey field also includes a prefix field and a direction field.

The structure supporting the KV S-TIE message of control type will be described as follows by taking that the control item is a PGP prefix as an example:

```
         ControlTypeValue
         {
             ControlID
             ControlDataKeyLength
             ControlDataKey
             {ControlDataCommKey
                  {
                      SystemID
                      LinkID
                      PoD
                      Level
                   }
                  Prefix //prefix field
                  Direction //direction field
               }
               ControlDataLength
               ControlData
               {
                 CommunitySet // Community set
                  NexthopSet //next hop set
            Cost
              }}
```

The apparatus control process will be described according to respective control scenarios, and the schematic diagram of the data center is still shown in FIG. 1:

Example 1: the target apparatus is unique and is a neighbor node of the control node:

Assuming that the control node in a data center 1 is Spine21, and the target apparatus is a neighbor node Node111 of Spine21.

The network administrator may input control commands at Spine21 through command lines or management interfaces such as Netconf or mib. The content of the control instruction should be able to indicate contents of respective fields expanded in the KV S-TIE message described above.

Spine21 converts the received control instruction into a KV S-TIE message. Since the target apparatus of the KV S-TIE message is Node111, the common key value field of the KV S-TIE message should carry the SystemID of Node111.

FIG. 5 is a schematic diagram illustrating the KV S-TIE message:
The KV S-TIE message 50 comprises a type field (WORD16 TYPE) 51, a control identifier (WORD16 ControlID) field 52, a length (WORD16 ControlDataKeyLength) field 53, a control data key (ControlDataKey) field 54 and a ControlData field 55, where the control data key field 54 comprises a common key value (ControlDataCommKey) field 541. In Example 1, the common key value field 541 carries the SystemID of Node111.

After Spine21 has constructed the KV S-TIE message, it can determine that the target apparatus of the KV S-TIE message is the neighbor node thereof. Therefore, the Spine21 may directly send the constructed KV S-TIE message to Node111.

After Node111 has received the KV S-TIE message, it is found through parsing that the KV S-TIE message is a message of control type, and the common key value field carries the SystemID of the present apparatus. Therefore, it can be determined that the KV S-TIE message is configured to control the parameters of the present apparatus. Therefore, the parsing is continued to obtain the value carried in the ControlID field, the item to be controlled by the KV S-TIE message is determined, the content in the ControlData field is further obtained to determine the value of the control item, and then the corresponding control item is adjusted by Node111 according to the value of the control item indicated in the KV S-TIE message.

Example 2-the target apparatus is unique and is a non-neighbor node of the control node:
Assuming that the control node in a data center 1 is Spine21, and the target apparatus is a neighbor node Node111 of Spine21.

The network administrator may input control commands at Spine21 through command lines or management interfaces such as Netconf or mib. The content of the control instruction should be able to indicate contents of respective fields expanded in the KV S-TIE message described above.

Spine21 converts the received control instruction into a KV S-TIE message. Since the target apparatus of the KV S-TIE message is Node111, the common key value field of the KV S-TIE message should carry the SystemID of Node111. Generally, the value of the SystemID field in the common key value field must be a valid value and shall be a node in the Spine21 database, otherwise the Spine21 cannot generate the KV S-TIE message.

After constructing the KV S-TIE message, the spine21 may send the KV S-TIE message to the corresponding target apparatus. Assuming that the SystemID field in Example 2 carries the SystemID of the Leaf 011, the Leaf 011 is a non-neighbor node of the Spine21, and the Spine21 cannot directly send the KV S-TIE message to the Leaf 011, then, the Spine21 may first send the KV S-TIE message to the neighbor Node111, and then the Node111 sends the KV S-TIE message to Leaf 011. It will be understood that in other examples, when Spine21 sends the KV S-TIE message to the non-neighbor node Leaf 011, a selected route may also be: Spine21-Node112-Leaf 011.

After Node111 has received the KV S-TIE message, it is found that the KV S-TIE message is a control type message, and the common key value field does not carry the SystemID of the present apparatus, but the SystemID of its neighbor Leaf 011, the Node111 no longer parses the KV S-TIE message, but directly floods the KV S-TIE message to the Leaf 011.

After Leaf 011 received the KV S-TIE message, it is found through parsing that the KV S-TIE message is a message of control type, and the common key value field carries the SystemID of the present apparatus, and it could be determined that the KV S-TIE message is configured to control parameters of the present apparatus. Therefore, the parsing is continued to proceed to obtain the value carried in the ControlID field, the item to be controlled by the KV S-TIE message is determined, and the content in the ControlData field is further obtained to determine the value of the control item, and then the corresponding control item is adjusted by the Leaf 011 according to the value of the control item indicated in the KV S-TIE message.

Example 3-the target apparatus is not unique, but may be all apparatus in the specified PoD:
Assuming that the control node in data center 1 is Spine21, and the target apparatus is a neighbor node Node111 of the Spine21.

The network administrator may input control commands at the Spine21 through the command line or management interfaces such as Netconf or mib. The content of the control commands should be able to indicate contents of respective fields expanded in the KV S-TIE message described above.

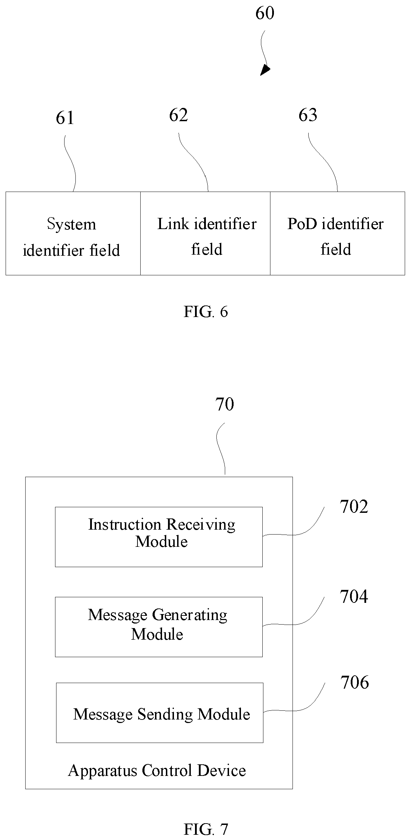

The Spine21 converts the received control command into a KV S-TIE message. In this embodiment, the common key value field of the KV S-TIE message not only comprises the system identifier field and the link identifier field. As shown in FIG. 6, the common key value field comprises a system identifier field 61, a link identifier field 62 and a PoD identifier field 63. For example, the PoD identifier field 63 may be a WORD16 PoD field. It will be understood that the common key value field 60 may also comprise a Level field. Of course, in some scenarios, the common key value field may comprise the Level field, but does not comprise the PoD identifier field.

Assuming that the "designated PoD" is PoD1 in FIG. 1, when generating the KV S-TIE message, the Spine21 may fill the SystemID field and LinkID field of the ControlDataCommKey field with "0" and fill the PoD identifier field with "1".

After constructing the KV S-TIE message, the Spine21 sends the KV S-TIE message to the corresponding target apparatus. Since the target apparatus of the KV S-TIE message are all apparatus in PoD1, Spine21 may determine through searching for the network topology in the database that in order to send the KV S-TIE message to the Pod1, the KV S-TIE message can be sent to the neighbor nodes Node111 and Node112 of its own.

After the Node111 and Node112 have received the KV S-TIE message, it is found that the KV S-TIE message is a control type message and the message is a wildcard message, therefore, the Node111 and Node112 execute within itself according to the instructions of the KV S-TIE message. At the same time, Node111 and Node112 will continue to flood the KV S-TIE message to Leaf 011 and Leaf 012 to ensure that all apparatus in PoD 1 receive the message.

After the Leaf 011 and Leaf 012 have received the KV S-TIE message, it is found through parsing that the KV S-TIE message is a control type message and the message is a wildcard message, therefore,the target apparatus of the KV S-TIE message comprises the present apparatus, and the Leaf 011 and Leaf 012 execute within the present node according to the instructions of the KV S-TIE message.

Example 4-the target apparatus is not unique, but apparatus in the entire data center network:
Still assuming that the control node in data center 1 is Spine21, and the target apparatus is a neighbor node Node111 of the Spine21.

The network administrator may input control commands at the Spine21 through the command line or management interfaces such as Netconf or mib. The content of the control commands should be able to indicate contents of respective fields expanded in the KV S-TIE message described above.

The Spine21 converts the received control instruction into a KV S-TIE message. In this embodiment, the common key value field of the KV S-TIE message also comprises the PoD identifier field, as shown in FIG. 6. Since the target apparatus of the KV S-TIE message in this embodiment are apparatus in the entire data center network, when generating the KV S-TIE message, the Spine21 may fill the PoD identifier field, the SystemID field and the LinkID field of the ControlDataCommKey field with "0".

After constructing the KV S-TIE message, the Spine21 may determine apparatus to which the KV S-TIE message is sent directly. Since the target apparatus are apparatus in the entire data center network, the Spine21 may send the KV S-TIE message to all neighbor nodes of its own, namely Node111, Node112, Node121 and Node122.

After the Node111, Node112, Node121 and Node122 have received the KV S-TIE message, it is found that the KV S-TIE message is a control type message and the message is a wildcard message, therefore, the Node111, Node112, Node121 and Node122 may execute within themselves according to the instructions of the KV S-TIE message. At the same time, Node111 and Node112 will continue to flood the KV S-TIE message to Leaf 011, Leaf 012, Leaf 021 and Leaf 022 to ensure that all apparatus in the data center except the control node receive the message.

After Leaf 011, Leaf 012, Leaf 021 and Leaf 022 have received the KV S-TIE message, it is found through parsing that the KV S-TIE message is a control type message, and the message is a wildcard message, therefore, the target apparatus of the KV S-TIE message comprises the present apparatus, and the Leaf 011, Leaf 012, Leaf 021 and Leaf 022 will also execute within the present node according to the instructions of the KV S-TIE message.

### Embodiment 4:

This embodiment provides an apparatus control device, and a schematic structural diagram of the apparatus control device 70 is shown in FIG. 7:

The apparatus control device 70 comprises an instruction receiving module 702, a message generating module 704 and a message sending module 706. The instruction receiving module 702 is configured to receive a control instruction; the message generating module 704 is configured to generate a KV TIE message according to the control instruction; the message sending module 706 is configured to send, according to the target control object, the KV TIE message to a corresponding target apparatus in the data center.

The KV TIE message mentioned herein comprises a ControlID field, a ControlDataKey field and a ControlData field. The ControlID field is configured to indicate the control item, the ControlData field comprises the value of the control item, the ControlDataKey field comprises the common key value field and the common key value field carries information indicating the target control object.

It will be understood that the apparatus control device 70 may be deployed on the control node side to implement the apparatus control method process at the control node side. The function of the instruction receiving module 702 may be implemented by an input unit of the control node or by a communication unit. For example, in an example of this embodiment, the network administrator may input control commands to the control node through a keyboard. In other examples of this embodiment, the network administrator may input control commands to another apparatus, and the another apparatus may send the control commands to the control node. The function of the message generating module 704 may be implemented by a processor of the control node, and the processor generates the KV TIE message according to the control instruction. The function of the message sending module 706 may be implemented by a communication device of the control node. It will be understood that the communication device of the control node may send the KV TIE message to the corresponding target apparatus in the data center in a wired or wireless manner.

The details of the apparatus control method implemented by the apparatus control device 70 at the control node side may refer to the description of the foregoing embodiments (for example, Embodiment 1 and Embodiment 3) and will not be repeated herein.

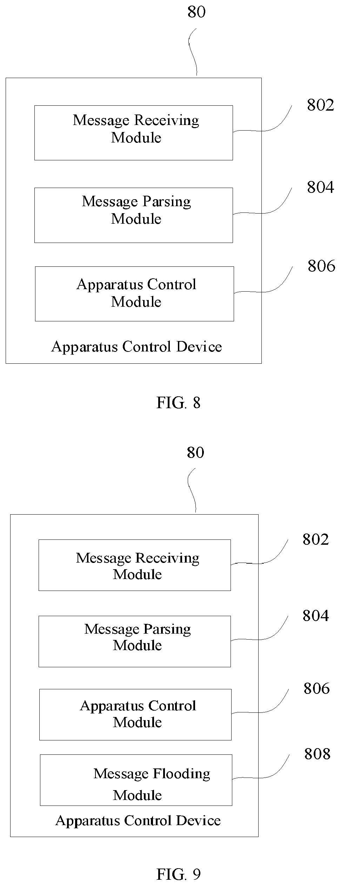

This embodiment also provides another apparatus control device, which is different from the apparatus control device 70 shown in FIG. 7 in that the apparatus control device is deployed on a PoD network apparatus in a data center, and it could cooperates with the apparatus control device 70 shown in FIG. 7. A schematic structural diagram of the apparatus control device 80 is shown in FIG. 8.

The apparatus control device 80 comprises a message receiving module 802, a message parsing module 804 and an apparatus control module 806. The message receiving module 802 is configured to receive a KV TIE message from a control node, the message parsing module 804 is configured to parse the KV TIE message to determine the target apparatus corresponding to the target control object in the KV TIE message, and the device control module 806 is configured to control the control item of the present apparatus according to the instructions of the KV TIE message, if the target apparatus comprises the present apparatus.

The KV TIE message mentioned here comprises a ControlID field, a ControlDataKey field and a ControlData field. The ControlID field is configured to indicate the control item, the ControlData field comprises the value of the control item, the ControlDataKey field comprises the common key value field and the common key value field carries information indicating the target control object.

It will be understood that the apparatus control device 80 is deployed at the control node side, and the apparatus control method process at the PoD network apparatus side may be implemented. The function of the message receiving module 802 may be implemented by the communication device of the PoD network apparatus. The message parsing module 804 parses the KV TIE message to determine the function of the target apparatus corresponding to the target control object in the KV TIE message, and the function of the apparatus control module 806 may be implemented by a processor of the PoD network apparatus.

For the apparatus control device that can be deployed on the PoD network apparatus, this embodiment provides another implementation shown in FIG. 9:

In addition to the message receiving module 802, the message parsing module 804 and the apparatus control module 806, the apparatus control device 80 also comprises a message flooding module 808. The message flooding module 808 is configured to flood the KV TIE message to a third apparatus when the target apparatus comprises the third apparatus. It will be understood that when the apparatus control device 80 is deployed on the PoD network apparatus, the function of the message flooding module 808 may also be implemented by a communication device of the PoD network apparatus. The communication device may flood the KV TIE message to the third apparatus in a wired or wireless manner.

The details of the apparatus control method implemented by the apparatus control device 80 at the control node side may refer to the description of the foregoing embodiments (for example, Embodiment 2 and Embodiment 3) and will not be repeated here.

The apparatus control device 70 provided in this embodiment may be applied to a control node in a data center, for example, applied to a layer 2 apparatus, while the apparatus control device 80 may be applied to a PoD network apparatus in the data center. By expanding the key value TIE of the RIFT protocol, the KV TIE message supports the control type message, and when receiving the control instruction from the network administrator, the control instruction is converted into a KV TIE message for control according to the field format in the KV TIE message, and then the KV TIE message is sent to the target apparatus corresponding to the target control object, such that the target apparatus can execute in accordance with the corresponding control requirements, thereby avoiding the problem that when performing access control to the target apparatus in the data center, it is required to log in to the corresponding target apparatus, or the problem of specially establishing a Netconf connection with the target apparatus, simplifying the visit process to the apparatus of the data center and optimizing the management plan of the data center.

### Embodiment 5:

This embodiment provides a storage medium that stores one or more computer programs that can be read, compiled, and executed by one or more processors. In this embodiment, the storage medium may store one of the first apparatus control program and the second apparatus control program. The first apparatus control program may be executed by one or more processors to implement the process of any one of the apparatus control methods provided in the foregoing embodiments at the control node side, and the second apparatus control program may be executed by one or more processors to implement the process of any one of the apparatus control methods provided in the foregoing embodiments at the PoD network apparatus side.

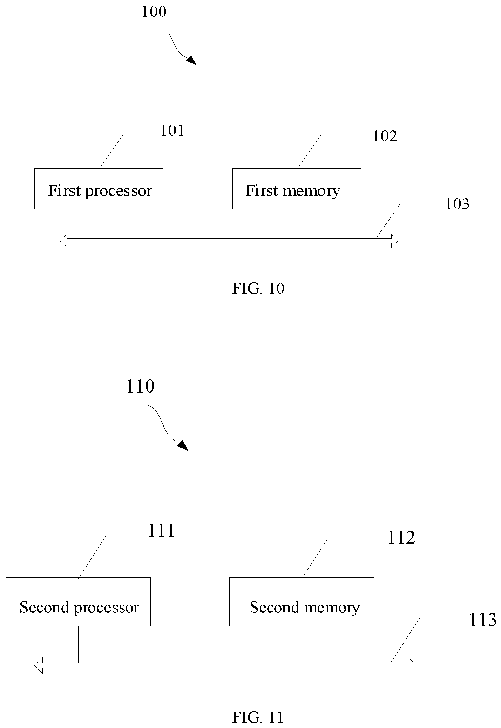

This embodiment also provides a control node, as shown in FIG. 10: the control node 100 comprises a first processor 101, a first memory 102 and a first communication bus configured to connect the first processor 101 and the first memory 102 103. Wherein the first memory 102 may be the aforementioned storage medium storing the first apparatus control program. The processor 101 can read the first apparatus control program, compile and execute the process on the control node side that implements the apparatus control method provided in the foregoing embodiment. The control node 100 may be a layer 2 apparatus in a data center. The details of the apparatus control method implemented by the control node 100 may refer to the description of the foregoing embodiments and will not be repeated herein.

This embodiment also provides a network apparatus, as shown in FIG. 11: the network apparatus 110 comprises a second processor 111, a second memory 112 and a second communication bus 113 configured to connect the second processor 111 and the second memory 112. The second memory 112 may be the aforementioned storage medium storing the second apparatus control program. The processor 111 may read the second apparatus control program, compile and execute the process of the apparatus control method provided in the foregoing embodiment at the PoD network apparatus side. The network apparatus 110 may be a layer 1 apparatus or a layer 0 apparatus in a data center. The details of the apparatus control method implemented by the control node 100 may refer to the description of the foregoing embodiments and will not be repeated here.

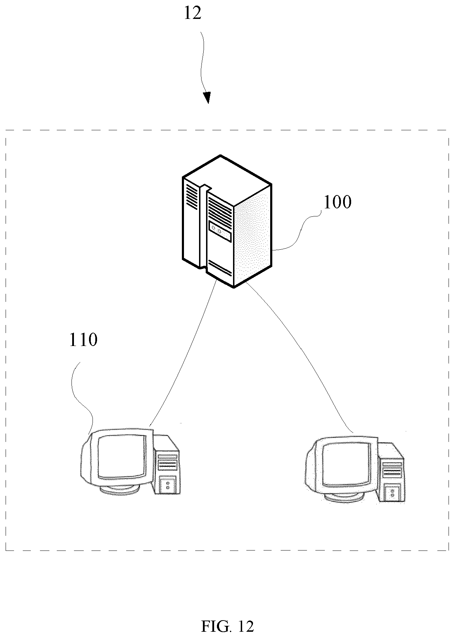

In addition, this embodiment also provides a data center. As shown in FIG. 12, the data center 12 comprises at least one control node 100 and at least one network apparatus 110. Of course, a common data center generally comprises a plurality of network apparatus.

In this application, the technical features in each embodiment may be combined and used in one embodiment without conflict.

Obviously, those skilled in the art should understand that all or some of the steps in the method disclosed above, the functional modules/units in the system and the device may be implemented as software (which may be implemented by program code executable by a computing device), Firmware, hardware and their appropriate combination. In hardware implementations, the division between functional modules/units mentioned in the above description does not necessarily correspond to the division of physical components; for example, a physical component may have a plurality of functions, or a function or step may be cooperatively executed by several physical components. Some or all physical components may be implemented as software executed by a processor, such as a central processing unit, a digital signal processor or a microprocessor, or as hardware, or as an integrated circuit, such as an application specific integrated circuit. Such software may be distributed on a computer-readable medium and executed by a computing device. In some cases, the steps shown or described may be performed in a different order than here. The computer-readable medium may comprise computer storage medium (or non-transitory medium) and communication medium (or transitory medium). As is well known to those skilled in the art, the term computer storage medium comprises volatile and non-volatile, removable and non-removable media implemented in any method or technology for storing information (such as computer-readable instruction, data structure, program module, or other data). The computer storage media comprise but are not limited to RAM, ROM, EEPROM, flash memory or other storage technologies, CD-ROM, digital versatile disk (DVD) or other optical disk storage, magnetic cassette, tape, magnetic disk storage or other magnetic storage device, or any other medium that can be used to store desired information and can be accessed by a computer. In addition, as is well known to those skilled in the art, the communication media usually contains computer-readable instruction, data structure, program module, or other data in a modulated data signal such as carrier waves or other transmission mechanism, and may comprise any information delivery media. Therefore, the present disclosure is not limited to any specific hardware and software combination.

## Claims

1. An apparatus control method, comprising:
receiving a control instruction;
generating a Key value Topology Information Element (KV TIE) message according to the control instruction, wherein the KV TIE message comprises a control identifier (ControlID) field, a control data key (ControlDataKey) field and a control data (ControlData) field, the ControlID field is configured to indicate a control item, the ControlData field comprises a value of the control item, the ControlDataKey field comprises a common key value field, and the common key value field carries information indicating a target control object; and
sending, according to the target control object, the KV TIE message to a target apparatus in a data center corresponding to the target control object.

2. The method of claim 1, wherein the KV TIE message further comprises a type (TYPE) field, and information carried in the TYPE field indicates whether the KV TIE message is a message for control.

3. The method of claim 1, wherein the KV TIE message further comprises at least one of a control data key length (ControlDataKeyLength) field and a control data length (ControlDataLength) field, the ControlDataKeyLength field is configured to indicate a length of the ControlDataKey field, and the ControlDataLength field is configured to indicate a length of the ControlData field.

4. The method of claim 1, wherein the KV TIE message comprises a Key value south Topology Information Element (KV S-TIE) message.

5. The method of claim 1, wherein the common key value field comprises a system identifier configured to indicate the target apparatus corresponding to the target control object, and a link identifier of the target apparatus.

6. The method of claim 5, wherein the common key value field further comprises at least one of the following:
a PoD identifier field configured to indicate a Point of Delivery (PoD) to which the target control object belongs and a level (Level) field configured to indicate a PoD to which the target control object belongs.

7. The method of claim 1, wherein sending, according to the target control object, the KV TIE message to atarget apparatus in a data center corresponding to the target control object comprises:
searching for a next-hop apparatus in a route from a present apparatus to the target apparatus according to a network topology relationship stored in a database; and
sending the KV TIE message to the next-hop apparatus, wherein the next-hop apparatus is configured to transmit the KV TIE message to the target apparatus.

8. The method of any one of claims 1-7, wherein the control item comprises at least one of a POD value, whether to enable a zero configuration mode (ZTPMode), a node name, whether to set an overload (Overload), whether to support a leaf-to-leaf (Leaflndecation) feature, a link cost, whether to enable a Bidirectional Forwarding Detection (BFD), whether to generate a default route, whether to enable a flooding reduction, a community (Community) and a PGP policy prefix.

9. The method of claim 8, wherein if the control item comprises the Community, the common key value field comprises a direction field, and the ControlData field comprises a value of at least one Community of the apparatus.

10. The method of claim 9, wherein a value of the ControlData field is a Community syntagm.

11. The method of claim 8, wherein if the control item comprises the PGP, the ControlDataKey field further comprises a prefix field and a direction field, and the ControlData field comprises a next hop set (NexthopSet), a community set (CommunitySet) and a cost (Cost).

12. An apparatus control method, comprising:
receiving a KV TIE message from a control node, wherein the KV TIE message comprises a ControlID field, a ControlDataKey field and a ControlData field, the ControlID field is configured to indicate a control item, the ControlData field comprises a value of the control item, the ControlDataKey field comprises a common key value field, and the common key value field carries information indicating a target control object;
parsing the KV TIE message to determine a target apparatus corresponding to the target control object in the KV TIE message; and
if the target apparatus comprises the apparatus, controlling the control item of the present apparatus according to an instruction in the KV TIE message.

13. The method of claim 12, further comprising:
if the target apparatus comprises a third apparatus, flooding the KV TIE message to the third apparatus, the third apparatus being at least one apparatus in the data center other than the present apparatus.

14. The method of claim 12, wherein the KV TIE message further comprises a TYPE field, and the information carried in the TYPE field indicates whether the KV TIE message is a message for control.

15. The method of claim 12, wherein the KV TIE message comprises a Key value south Topology Information Element (KV S-TIE) message.

16. The method of claim 12, wherein the common key value field comprises a system identifier configured to indicate a target apparatus corresponding to the target control object, and a link identifier of the target apparatus.

17. The method of claim 16, wherein if the KV TIE message comprises a system identifier of the present apparatus, or if the KV TIE message is a wildcard message, it is determined that the target apparatus comprises the present apparatus.

18. The method of any one of claims 12-17, wherein the control item comprises at least one of a POD value, whether to enable a zero configuration mode (ZTPMode), a node name, whether to set an overload (Overload), whether to support a leaf-to-leaf (LeafIndecation) feature, a link cost, whether to enable a Bidirectional Forwarding Detection (BFD), whether to generate a default route, whether to enable a flooding reduction, a community (Community) and a PGP policy prefix.

19. The method of claim 18, wherein if the control item comprises the Community, the common key value field comprises a direction field, and the ControlData field comprises a value of at least one Community on the apparatus.

20. The method of claim 18, wherein if the control item comprises the PGP, the ControlDataKey field further comprises a prefix field and a direction field, and the ControlData field comprises a next hop set (NexthopSet), a community set (CommunitySet) and a cost (Cost).

21. An apparatus control device, comprising:
an instruction receiving module configured to receive a control instruction;
a message generating module configured to generate a KV TIE message according to the control instruction, wherein the KV TIE message comprises a ControlID field, a ControlDataKey field and a ControlData field, the ControlID field is configured to indicate a control item, the ControlData field comprises a value of the control item, the ControlDataKey field comprises a common key value field, and the common key value field carries information indicating a target control object; and
a message sending module configured to send, according to the target control object, the KV TIE message to a corresponding target apparatus in a data center.

22. An apparatus control device, comprising:
a message receiving module configured to receive a KV TIE message from a control node, wherein the KV TIE message comprises a ControlID field, a ControlDataKey field and a ControlData field, the ControlID field is configured to indicate a control item, the ControlData field comprises a value of the control item, the ControlDataKey field comprises a common key value field, and the common key value field carries information indicating a target control object;
a message parsing module configured to parse the KV TIE message to determine a target apparatus corresponding to the target control object in the KV TIE message; and
an apparatus control module, configured to control the control item of a present apparatus according to an instruction of the KV TIE message, if the target apparatus comprises the present apparatus.

23. A control node, comprising a first processor, a first memory and a first communication bus, wherein
the first communication bus is configured to implement connection and communication between the first processor and the first memory;
the first processor is configured to execute one or more programs stored in the first memory to implement steps of the apparatus control method according to any one of claims 1 to 11.

24. The control node of claim 23, wherein the control node is a layer 2 apparatus in a data center.

25. A network apparatus, comprising a second processor, a second memory and a second communication bus, wherein
the second communication bus is configured to implement connection and communication between the second processor and the second memory;
the second processor is configured to execute one or more programs stored in the second memory to implement steps of the apparatus control method according to any one of claims 12 to 20.

26. A data center, comprising at least one control node according to claim 23 or 24 and at least one network apparatus according to claim 25.
